# DEMANDE DE BREVET EUROPEEN

(11) **EP 0 545 803 A1**
(43) Date de publication de la demande: **09.06.1993**
(21) Numéro de dépôt: 92403230.3
(22) Date de dépôt: 30.11.1992
(51) Int. Cl.: A47L 7/00, B65G 53/24

(54) **Procédé et dispositif d'aspiration et de stockage de déblais ou produits quelconques**

(30) Priorité: 04.12.1991 FR 9115015
(71) Demandeur: GAZ DE FRANCE, F-75017 Paris (FR)
(72) Inventeur: Lasserre, Pierre, F-95210 Saint Gratien (FR)
(74) Mandataire: Durand, Yves Armand Louis

(57) **Abrégé**

La présente invention concerne un procédé et un dispositif d'aspiration et de stockage de déblais ou produits quelconques.

Ce dispositif comprend essentiellement un outil ou conduit d'aspiration (1) des déblais (4) relié à un appareil d'aspiration (2) via un système séparateur (3) déblais-fluide d'aspiration auquel est raccordé un conteneur (7), ce conteneur étant un conteneur à fond ouvert (8) rendu étanche vis-à-vis de l'atmosphère extérieure par simple application du fond ouvert (8) sur le sol (S).

Ce dispositif permet par exemple l'aspiration des terres provenant d'un trou de forage ou d'une fouille dans le sol.

## Description

La présente invention a essentiellement pour objet un procédé et un dispositif d'aspiration et de stockage de produits quelconques et tels que par exemple ceux provenant des trous de forage ou des fouilles effectuées dans le sol.

Il est déjà connu d'utiliser sur les chantiers des petits aspirateurs grâce auxquels les terres résultant d'une fouille ou d'un trou de forage par exemple sont aspirées dans des petits conteneurs. Bien entendu, les conteneurs doivent être vidés périodiquement, afin de stocker les déblais dans des récipients plus volumineux et transportables. Toutefois, comme on le comprend, ces opérations sont longues, fastidieuses et augmentent les coûts du chantier.

Par ailleurs, on connaît des engins de terrassement équipés d'un appareil d'aspiration permettant l'aspiration et le stockage des terres directement dans un conteneur de volume important.

Toutefois, lorsqu'il est plein, il est alors nécessaire de procéder au transvasement des déblais dans d'autres récipients, ou de vider entièrement le conteneur hors de la zone de travail.

Ceci est encore coûteaux, car on est parfois obligé de déplacer sur une longue distance l'engin d'aspiration.

La présente invention a pour but de résoudre ces problèmes en proposant un procédé et un dispositif qui permettent de stocker facilement les déblais durant un temps donné, et qui facilitent la manutention des déblais stockés.

A cet effet, l'invention a pour objet un procédé d'aspiration et de stockage de déblais ou produits quelconques, et du type consistant à aspirer des déblais ou analogues provenant par exemple d'une fouille ou d'un trou de forage dans le sol, et à recueillir ces déblais dans un conteneur après les avoir séparés du fluide, tel que l'air, permettant leur aspiration, caractérisé en ce que ledit conteneur, qui possède un fond ouvert, est appliqué par son fond ouvert sur une surface, telle que par exemple le sol lui-même, pour assurer l'étanchéité du conteneur vis-à-vis de l'atmosphère extérieure et préserver ainsi une dépression à l'intérieur dudit conteneur, de sorte qu'après remplissage du conteneur, celui-ci est simplement soulevé pour dégager le tas de déblais sous-jacent, et est à nouveau appliqué par son fond ouvert en un autre endroit sur ladite surface pour réaliser comme ci-dessus un autre tas de déblais, et ainsi de suite.

Selon un mode de réalisation préféré, la surface précitée est constituée par une feuille de matière quelconque interposée entre le sol et le fond ouvert du conteneur, et constituant par exemple le fond d'un sac.

L'invention vise également un dispositif pour la mise en oeuvre du procédé ci-dessus et du type comprenant au moins un outil ou conduit d'aspiration des déblais relié à un appareil d'aspiration via un système séparateur déblais-fluide d'aspiration auquel est raccordé un conteneur, caractérisé en ce que ledit conteneur est un conteneur à fond ouvert et rendu étanche vis-à-vis de l'atmosphère extérieure par simple application du fond ouvert sur une surface, telle que par exemple le sol lui-même.

Ce dispositif est encore caractérisé en ce que le fond ouvert du conteneur est muni d'une jupe d'étanchéité.

Le conteneur, suivant un exemple de réalisation, peut présenter la forme d'un cône dont la base constitue le fond ouvert précité et dont le sommet porte le système séparateur précité.

La jupe d'étanchéité entourant le fond ouvert du conteneur peut prendre appui directement sur le sol comme dit plus haut ou encore sur une feuille de matière quelconque interposée entre la jupe et le sol, et constituant par exemple le fond d'un sac.

Ainsi le tas de déblais sera directement ensaché à l'endroit voulu.

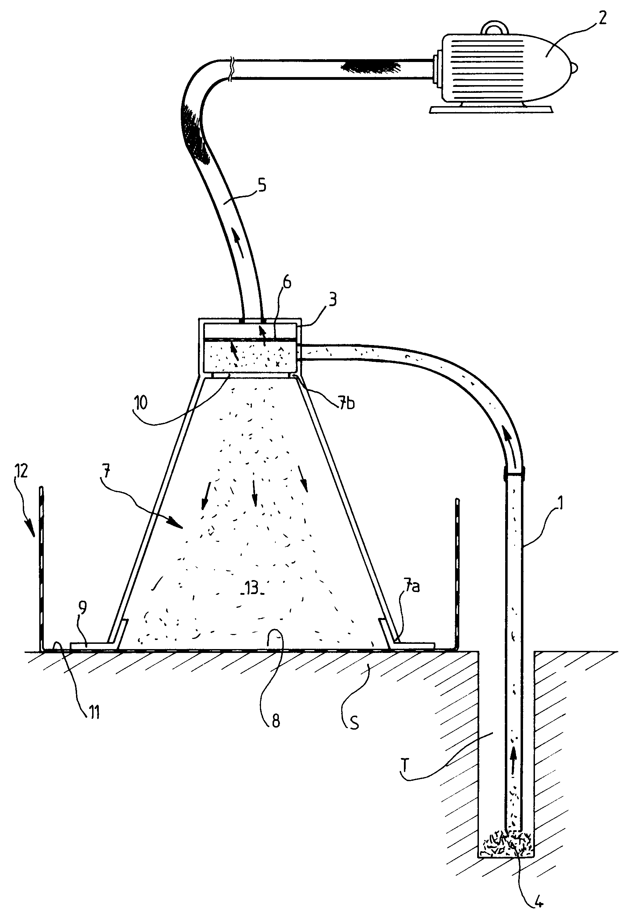

Mais d'autres avantages et caractéristiques de l'invention apparaîtront mieux dans la description détaillée qui suit et se réfère au dessin unique annexé, donné à titre d'exemple, et montrant schématiquement et en élévation un dispositif d'aspiration et de stockage conforme à cette invention.

Suivant l'exemple de réalisation représenté sur cette figure, un dispositif conforme à cette invention comprend essentiellement un outil d'aspiration 1 revêtant la forme d'une ou plusieurs conduites et relié à un appareil d'aspiration 2 par l'intermédiaire d'un sytème 3 séparant les déblais 4 aspirés dans un trou de forage T par exemple, de l'air d'aspiration obtenu par l'appareil 2.

On a montré en 5 un conduit reliant l'appareil aspirateur 2 au système séparateur 3 qui comporte intérieurement tout moyen approprié tel qu'un tamis 6 apte à séparer les déblais 4 de l'air d'aspiration.

Au système séparateur 3, est raccordé de façon communiquante un conteneur 7 pouvant recevoir les déblais aspirés 4.

Suivant une autre caractéristique essentielle de l'invention, le conteneur 7 est démuni de fond, ou plutôt comporte un fond ouvert 8 qui peut être rendu étanche vis-à-vis de l'atmosphère extérieure, de façon à préserver la dépression dans ledit conteneur, par simple application du fond ouvert 8 sur le sol S.

Suivant un mode de réalisation préféré, l'étanchéité en question peut être assurée par une jupe d'étanchéité 9 agencée de toute manière appropriée quelconque autour du fond ouvert 8, c'est-à-dire plus précisément autour du bord inférieur 7a du conteneur 7, lequel bord définit le fond ouvert 8.

On a montré en 7b le bord supérieur du conteneur 7 qui comporte une ouverture 10 assurant la communication entre conteneur 7 et système séparateur 3. Ce bord 7b constituant l'extrémité supérieure du conteneur 7 peut être raccordé, par tout moyen approprié, de façon amovible ou non, au système séparateur 3.

Suivant l'exemple de réalisation représenté sur la figure unique annexée, le conteneur 7 présente sensiblement la forme d'un cône dont la base constitue précisément le fond ouvert 8 et dont le sommet comporte le système séparateur 3 comme il vient d'être décrit.

Le fond ouvert 8 du conteneur 7 peut prendre appui directement sur le sol S sans que cela nuise à l'étachéité du conteneur grâce à la présence de la jupe d'étanchéité 9.

On peut également interposer une feuille de matière quelconque entre le sol S et le fond ouvert 8. Cette feuille peut par exemple constituer le fond 11 d'un sac 12 dans lequel seront directement ensachés les déblais 4.

Mais, pour une meilleure compréhension de l'invention, on décrira ci-après brièvement le fonctionnement et les avantages du dispositif qui vient d'être décrit.

Au fur et à mesure du forage du trou T, l'outil ou conduit 1 introduit dans ce trou permettra l'aspiration des déblais 4 grâce à l'appareil d'aspiration 2, et cela via le système séparateur 3.

Plus précisément, les déblais 4 arrêtés par le moyen séparateur ou tamis 6 chuteront par gravité dans le conteneur 7, alors que l'air aspiré seul passera dans le conduit 5.

Ainsi, les déblais 4 receuillis dans le conteneur 7 seront retenus par celui-ci et formeront en quelque sorte un tas 13 résultant du remplissage sensiblement complet du conteneur, lequel aura été appliqué par son fond ouvert 8 sur le sol S ou sur le fond 11 d'un sac 12, à tout endroit commode où l'on veut réaliser le tas de déblais 13.

Une fois le tas de déblais 13 réalisé par remplissage sensiblement complet du conteneur 7, ledit conteneur est tout simplement soulevé pour dégager le tas de déblais sous-jacent 13, et pour continuer l'opération d'aspiration des déblais, il suffit tout simplement d'appliquer par son fond ouvert 8 le conteneur 7 en un autre endroit du sol S ou sur le fond 11 d'un autre sac 12, et ainsi de suite.

Dans le cas d'emploi de sacs, on comprend que le remplissage de ces sacs sera, grâce à l'invention, facilité au fur et à mesure de l'avancement des travaux, ce qui est particulièrement avantageux dans les chantiers en millieu urbain.

Mais l'invention peut également trouver application dans d'autres types de travaux, tels que les travaux de forage ou de terrassement en milieu non urbain. D'une amnière générale, le dispositif de l'invention peut avantageusement utilisé pour tous travaux de nettoyage d'ouvrages, nécessitant des moyens d'aspiration.

On a donc réalisé suivant l'invention un procédé et un dispositif d'aspiration qui permettent un stockage rationnel, rapide et à l'endroit adéquat des déblais ou autres produits quelconques, et qui contribuent largement à minimiser les coûts d'exploitation des chantiers.

Bien entendu, l'invention n'est nullement limitée au mode de réalisation décrit et illustré qui n'a été donné qu'à titre d'exemple.

C'est ainsi que la forme, la matière et la fixation de la jupe d'étanchéité peuvent être quelconques, de même que la géométrie du conteneur à fond ouvert.

C'est dire que l'invention comprend tous les équivalents techniques des moyens décrits ainsi que leurs combinaisons si celles-ci sont effectuées suivant son esprit.

## Revendications

1. Procédé d'aspiration et de stockage de déblais ou produits quelconques, et du type consistant à aspirer des déblais ou analogues provenant par exemple d'une fouille ou d'un trou de forage dans le sol, et à recueillir ces déblais dans un conteneur après les avoir séparés du fluide, tel que l'air, permettant leur aspiration, caractérisé en ce que ledit conteneur, qui possède un fond ouvert, est appliqué par son fond ouvert sur une surface, telle que par exemple le sol lui-même, pour assurer l'étanchéité du conteneur vis-à-vis de l'atmosphère extérieure, et préserver ainsi une dépression à l'intérieur dudit conteneur, de sorte qu'après remplissage du conteneur, celui-ci est simplement soulevé pour dégager le tas de déblais sous-jacent et est à nouveau appliqué par son fond ouvert en un autre endroit sur ladite surface pour réaliser comme ci-dessus un autre tas de déblais et ainsi de suite.

2. Procédé selon la revendication 1, caractérisé en ce que la surface précitée est constituée par une feuille de matière quelconque interposée entre le sol et le fond ouvert du conteneur, et consituant par exemple le fond d'un sac.

3. Dispositif d'aspiration et de stockage de déblais ou produits quelconques, pour la mise en oeuvre du procédé selon la revendication 1 ou 2 et du type comprenant au moins un outil ou conduit d'aspiration (1) des déblais (4) relié à un appareil (2) d'aspiration via un sytème séparateur (3) déblais-fluide d'aspiration auquel est raccordé un conteneur (7), caractérisé en ce que ledit conteneur est un conteneur à fond ouvert (8) et rendu étanche vis-à-vis de l'atmosphère extérieure par simple application du fond ouvert (8) sur une surface, telle que par exeple le sol lui-même (S).

4. Dispositif selon la revendication 3, caractérisé en ce que le fond ouvert (8) du conteneur (7) est muni d'une jupe d'étanchéité (9).

5. Dispositif selon la revendication 3 ou 4, caractérisé en ce que le conteneur (7) présente sensiblement la forme d'un cône dont la base constitue le fond ouvert précité (8), et dont le sommet porte le système séparateur précité (3).

6. Dispositif selon l'une des revendications 3 à 5, caractérisé en ce que la jupe d'étanchéité (9) prend appui directement sur le sol (S) ou sur une feuille de matériau quelconque et constituant par exemple le fond (11) d'un sac (12).
